# EUROPÄISCHE PATENTSCHRIFT

(11) **EP 0 865 978 B1**
(45) Veröffentlichungstag und Bekanntmachung des Hinweises auf die Patenterteilung: **30.06.1999**
(21) Anmeldenummer: 98890058.5
(22) Anmeldetag: 05.03.1998
(51) Int. Cl.: B61C 9/46, B60K 7/00

(54) **Elektromotorischer Radnabenantrieb für ein Fahrzeugrad**
Electric motor wheel hub drive for a vehicle wheel
Entraînement à moteur électrique au moyeu de roue pour une roue d'un véhicule

(30) Priorität: 19.03.1997 AT 48497
(43) Veröffentlichungstag der Anmeldung: 23.09.1998
(73) Patentinhaber: ABB Daimler Benz Transportation Austria GmbH, 2351 Wiener Neudorf (AT)
(72) Erfinder: Neudorfer, Harald, Dipl.-Ing., 2514 Traiskirchen (AT)
(74) Vertreter: Köhler-Pavlik, Johann, Dipl.-Ing.

(56) Entgegenhaltungen:
- EP-A- 0 582 563
- DE-A- 4 230 137

## Beschreibung

Die Erfindung betrifft einen elektromotorischen Radnabenantrieb für ein Fahrzeugrad, insbesondere für ein Rad eines Schienenfahrzeuges nach dem Oberbegriff des Patentanspruchs 1.

Bei elektromotorischen Direktantrieben ist der Elektromotor mit einem anzutreibenden Rad oder Reifen ohne Zwischenschaltung eines Getriebes verbunden. Neben der Einsparung von Konstruktionsteilen, wie Getriebe bzw. Umlenkvorrichtungen für den Drehmomentfluß können mit solchen Konstruktionen auch Raumvorteile erzielt werden. Letztere sind insbesondere für Niederflurfahrzeuge vorteilhaft, bei denen nur wenig Platz für die Antriebseinheiten zur Verfügung steht. Bekannte Systeme, wie z.B. ein elektromotorischer Direktantrieb für Schienenfahrzeuge gemäß der EP 0 413 337, bei dem der Elektromotor neben dem anzutreibenden Fahrzeugrad angeordnet ist, sind in axialer Richtung relativ breit, wodurch ein relativ breiter Radkasten benötigt wird. Andere bekannte Antriebsmotoren dieser Art können aufgrund ihrer Konstruktion nur mit relativ großem Aufwand gewartet bzw. ausgetauscht werden. Der getriebelose Außenläufer-Radnabenmotor gemäß der AT 401 761 weist eine Achse auf, welche über eine Schwinge mit dem Fahrwerksrahmen, Drehgestellrahmen od. dgl. verbunden wird. Zum Tausch von Verschleißteilen, wie z.B. den Radreifen oder allfälligen Bremsscheiben od. dgl. muß die Verbindung zwischen Achse und Drehgestellrahmen gelöst werden und entweder der Wagenkasten nach oben angehoben und der Motor entfernt werden bzw. der Motor nach unten ausgebaut werden. Danach werden die auszutauschenden Teile entfernt und durch neue ersetzt.

Aus der EP 0 579 084 A1 ist ein als Außenläufermotor ausgebildeter Radnabenantrieb bekannt, der über einen Lagerträger an einer Drehgestellschwinge einseitig gelagert ist. Durch diese Konstruktion ist der gesamte Motor axial nach außen ausbaubar. Nachteilige an dieser Konstruktion ist aber, daß beim Ausbau des Antriebs zusätzlich zu den Motorbestandteilen auch der Lagerträger ausgebaut werden muß, wodurch das Hantieren erschwert wird. Die Konstruktion erfordert durch die Aufhängung auch mehr Platz.

Ziel der vorliegenden Erfindung ist es, einen Radnabenantrieb zu schaffen, bei dem die Verschleißteile aber auch der komplette Antrieb einfach und rasch getauscht werden können, wobei die oben erwähnten Nachteile vermieden werden.

Die Aufgabe wird erfindungsgemäß dadurch gelöst, daß die einseitige Aufhängung über ein mit der Achse verbundenes Tragschild geschieht, welches Tragschild einen Tragschildzapfen aufweist, der in eine Bohrung in der Achse in das Innere des Radnabenantriebs hineinragt. Das innenseitige Lagerschild bekannter Konstruktionen wird durch das die Aufhängung bildende Tragschild ersetzt, wodurch die Aufhangung in die Antriebseinheit integriert wird. Das Tragschild wird mit dem Fahrzeugrahmen verbunden, der den Wagenkasten od. dgl. trägt. Aus der einseitigen Aufhängung des Radnabenantriebs resultiert eine geringere Baulänge und eine einfachere Handhabung und Wartung desselben. Verschleißteile werden vorzugsweise an der, der Aufhängung gegenüberliegenden Seite des Radnabenantriebs angeordnet und können somit einfach und rasch getauscht werden. Ebenso kann die ganze Antriebseinheit relativ einfach nach Lösen der Verbindung des Tragschilds mit der Achse des Radnabenantriebs entfernt werden. Durch die Konstruktion mit dem Tragschildzapfen wird eine stabile Befestigung des Radnabenantriebs mit dem Tragschild und mit dem Fahrzeugrahmen ohne Befestigungsmittel erreicht. Die Antriebseinheit wird einfach auf den Tragschildzapfen des Tragschilds aufgesteckt und das Tragschild mit Schrauben od. dgl. an der Achse des Radnabenantriebs befestigt und somit vor ungewolltem Lösen gesichert.

Vorteilhafterweise ist das Tragschild an der, der Fahrzeugmitte zugewandten Seite des Radnabenantriebs mit der Achse verbunden. Verschleißteile werden vorzugsweise an der Außenseite des Radnabenantriebs angeordnet und können somit einfach und rasch von außen getauscht werden. Durch diese Konstruktion kann auch der komplette Antrieb bei der Demontage einfach und rasch seitlich nach außen abgezogen werden, ohne daß der Wagenkasten angehoben bzw. der Antrieb nach unten entfernt werden muß.

Vorteilhafterweise ragt der Tragschildzapfen bis über den mittleren Aufstandspunkt des Fahrzeugrades in das Innere des Radnabenantriebs hinein. Dadurch wird eine höhere Stabilität und Festigkeit der Aufhängung erreicht.

Das Aufstecken des Radnabenantriebs auf den Tragschildzapfen des Tragschildes wird dadurch erleichtert, daß die Bohrung in der Achse in Richtung des Inneren des Radnabenantriebs konisch verjüngend ausgebildet ist, und daß der Tragschildzapfen zur Bohrung vorzugsweise komplementäre Gestalt aufweist. Durch diese konstruktive Maßnahme kann eine Preßpassung des Tragschildzapfens in der Bohrung der Achse erzielt werden, wodurch ein sicherer Halt der Antriebseinheit gegeben ist. Auch das Abziehen der Antriebseinheit vom Tragschildzapfen ist bei konischer Ausführung desselben leichter zu bewerkstelligen, als bei zylindrischer Ausführung.

Für ein einfacheres Abziehen des Radnabenantriebs weist der Tragschildzapfen gemäß einem weiteren Erfindungsmerkmal mindestens eine, vorzugsweise ringförmige Abpreßnut auf, welche mit mindestens einer Zuleitung verbunden ist. Nach dem Lösen der Schrauben od. dgl., welche das Tragschild mit der Achse verbinden, wird über die oder jede Zuleitung z.B. Öl, Glycerin od. dgl. mit hohem Druck in die Abpreßnuten befördert, wodurch die vorzugsweise konische Bohrung in der Achse geringfügig aufgedehnt wird und sich der Radnabenantrieb automatisch vom Tragschildzapfen löst.

Weist die Achse mäanderförmig verlaufende Kühlkanäle auf, deren Anschlüsse an der Stirnseite der Bohrung in der Achse münden, kann die Montage bzw. Demontage des Radnabenantriebs noch weiter erleichtert werden, indem die Zu- und Ableitung des Kühlmediums nebeneinander angeordnet und einfach durch das Innere des Tragschildzapfens geführt werden.

Alternativ dazu können die Kühlkanäle an der Oberfläche der Achse auch in Form einer Doppleschraube bzw. -spirale angeordnet sein, wobei die Anschlüsse an der Stirnseite der Bohrung in der Achse münden. Die beiden ineinanderlaufenden Schraubenlinien sind dabei an der, der Sirnseite der Bohrung gegenüberliebenden Seite der Achse miteinander verbunden, sodaß ein geschlossener Kühlkreislauf resultiert.

Diese Zuführung des Kühlmediums wird vereinfacht, wenn im Tragschildzapfen Bohrungen od. dgl. zur Aufnahme von Anschlußleitungen zur Fürung des Kühlmediums enthalten sind. Somit erfolgt die Zu- und Ableitungen des Kühlmediums durch den Tragschildzapfen, wodurch die Aufhängung des Antriebs durch die Anschlußleitungen nicht behindert wird.

Vorteilhafterweise sind die elektrischen Anschlüsse des Radnabenantriebs in einem am Tragschild befestigten Klemmenkasten angeordnet. Durch diese Maßnahme wird der Tausch der gesamten Antriebseinheit noch weiter erleichtert.

Vorteilhafterweise ist der Radnabenantrieb durch eine Synchron-, Asynchron- oder Transversalflußmaschine gebildet.

Details der Erfindung werden anhand der Zeichnungen näher erläutert, welche ein Ausführungsbeispiel eines getriebelosen elektromotorischen Radnabenmotors mit der erfindungsgemäßen Aufhängung zeigen.

Darin zeigen
- Fig. 1: einen Längsschnitt eines Radnabenantriebs für den Radreifen eines Schienenfahrzeuges,
- Fig. 1a: das Detail A der Fig. 1 in größerem Maßstab,
- Fig. 1b: das Detail B der Fig. 1 in größerem Maßstab,
- Fig. 2: eine Seitenansicht des Radnabenantriebs gemäß Fig. 1,
- Fig. 3: schematisch die Verbindung des erfindungsgemäßen Radnabenantriebs mit dem Wagenkasten eines Schienenfahrzeuges, und
- Fig. 4: eine Variante des Radnabenantriebs für das Rad eines nicht schienengebundenen Fahrzeuges.

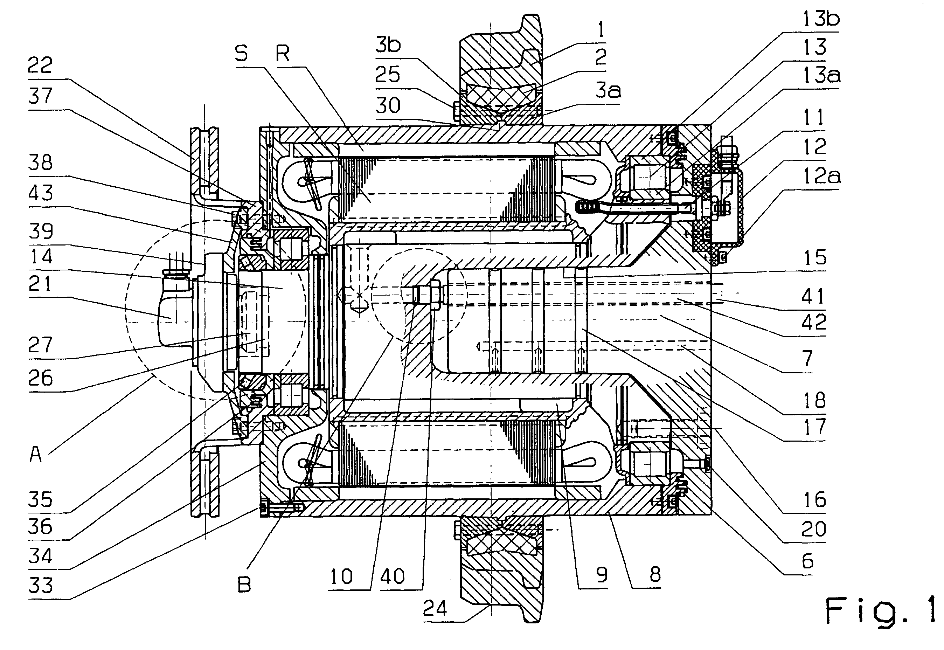

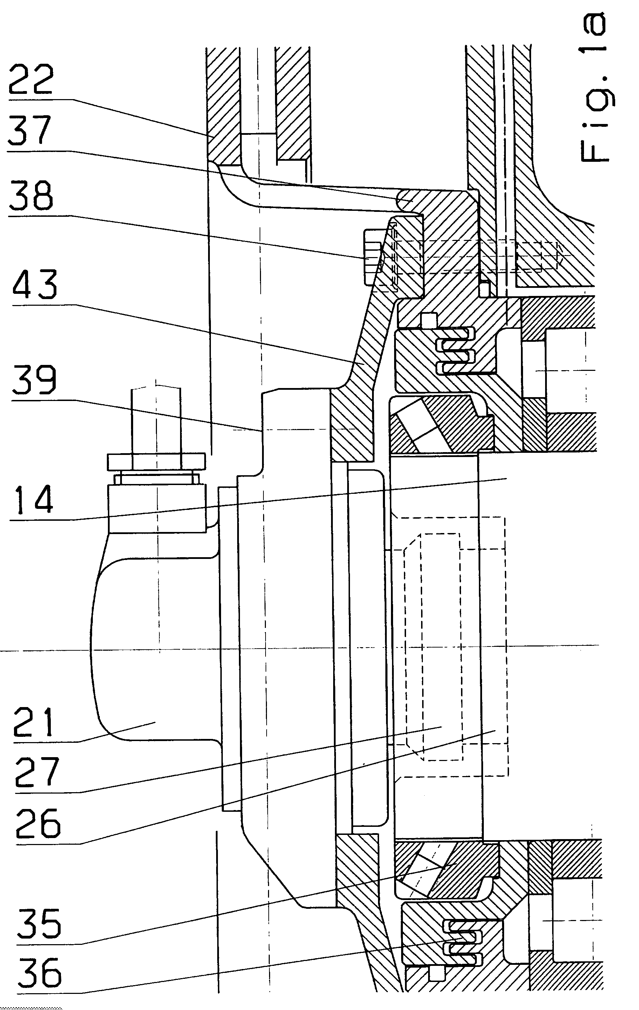

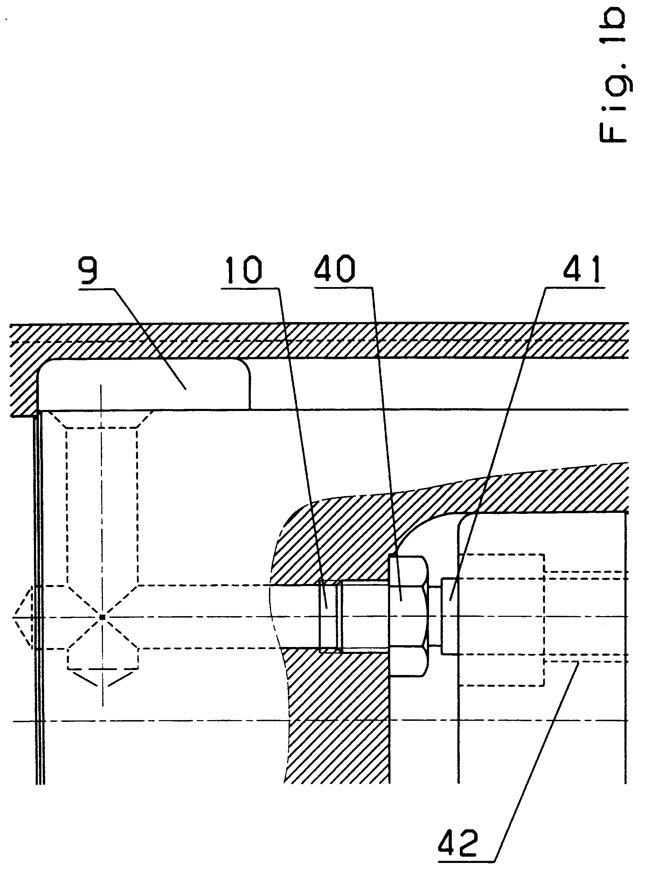

Bei dem in Fig. 1 dargestellten Radnabenantrieb handelt es sich um einen Wechselstrom-Außenläufer-Radnabenmotor, im besonderen um einen dreiphasigen Asynchronmotor mit Kurzschlußläufer. Der Motor besteht aus einem feststehenden Teil, dem Ständer oder Stator S, und einem umlaufenden Teil, dem Läufer oder Rotor R. Der Rotor R wird von einem Rotorgehäuse 8 umschlossen. Der Radreifen 1 ist über elastische Elemente 2 und Felgenringe 3a, 3b am Rotorgehäuse 8 befestigt. Zu diesem Zweck werden die Felgenringe 3a, 3b mit Hilfe von Schrauben 25 od. dgl. an einem, am Rotorgehäuse 8 integrierten oder aufgesteckten Befestigungsring 30 montiert. Bei den elastischen Elementen 2 kann es sich um klotzförmige, paketförmige oder ringförmige Bauteile vorzugsweise aus Gummi od. dgl. handeln. Das rotierende Rotorgehäuse 8 ist über Schrauben 33 od. dgl. an einem äußeren Lagerschild 34 befestigt und über ein äußeres Lager 35 an einer stillstehenden Achse 14 gelagert. Eine Labyrinthdichtung 36 dient dazu, daß kein Schmutz ins Motorinnere und kein Schmiermittel nach außen gelangt. Anstelle eines üblicherweise vorhandenen inneren Lagerschildes ist erfindungsgemäß ein Tragschild 6 vorgesehen, das mit der Achse 14 einseitig verbunden ist. Das Rotorgehäuse 8 ist über ein Loslager 13 am Tragschild 6 gelagert, wobei der Loslagerinnenring 13a mit dem Tragschild 6 und der Loslageraußenring 13b mit dem Rotorgehäuse 8 verbunden ist. Im Tragschild 6 kann eine Nachschmieröffnung 20 für das Loslager 13 integriert sein. Das Tragschild 6 weist einen in Richtung des Inneren des Radnabenantriebs hin konisch verjüngend ausgebildeten Tragschildzapfen 7 auf, der in eine komplementär gestaltete Bohrung 15 in der Achse 14 in das Innere des Radnabenantriebs hineinragt. Dabei ragt der Tragschildzapfen 7 vorzugsweise über den mittleren Aufstandspunkt 24 des Rades 1 in das Innere des Radnabenantriebs hinein. Durch die komplementäre Form kann eine Preßpassung des Tragschildzapfens 7 in der Bohrung 15 für eine sichere Aufhängung des Radnabenantriebs erzielt werden. Diese Verbindung zwischen Tragschild 6 und Achse 14 wird mit Schrauben 16 od. dgl. gesichert. Der Tragschildzapfen 7 ist im dargestellten Ausführungsbeispiel mit drei ringförmigen Abpreßnuten 17 versehen, welche mit einer oder mehreren Zuleitungen 18 verbunden sind. Die Zuleitungen 18 verlaufen im Inneren des Tragschildzapfens 7 parallel zur Achse 14 und enden in einem von außen leicht zugänglichen Anschluß für ein flüssiges oder gasförmiges Druckmedium. Vorteilhafterweise ist das Tragschild 6 an der, der Fahrzeugmitte zugewandten Seite des Radnabenantriebs mit der Achse 14 verbunden, sodaß im Falle eines Tauschs des Radnabenantriebs dieser einfach und rasch seitlich nach außen abgezogen werden kann. Zu diesem Zweck werden die Schrauben 16 od. dgl. geöffnet und über die oder jede Zuleitung 18 Öl, Glycerin od. dgl. mit hohem Druck eingeleitet, wodurch die Bohrung 15 in der Achse 14 minimal aufgeweitet wird und sich der Tragschildzapfen 7 automatisch von der Achse 14 löst.

An der Außenseite des Tragschildes 6 ist mittels Schrauben 12a od. dgl. ein Klemmenkasten 12 befestigt, der die elektrischen Anschlüsse 11 für den Radnabenantrieb enthält.

Zur Kühlung des Radnabenantriebs sind in der Achse 14 Kühlkanäle 9 enthalten, durch welche das Kühlmedium zum Abführen der Wärmeenergie gefördert wird. Vorteilhafterweise verlaufen die Kühlkanäle mäanderförmig und münden deren Anschlüsse 10 nebeneinander an der Stirnseite der Bohrung 15 der Achse 14. Der Tragschildzapfen 7 weist mindestens eine Bohrung 42 od. dgl. zur Aufnahme von Anschlußleitungen 41 zur Führung des Kühlmediums auf, die parallel zur Achse 14 verläuft. Für eine leichtere Montage und Demontage des Radnabenantriebs werden in die Anschlüsse 10 Hülsen 40 od. dgl. dichtend eingeschraubt, welche vorzugsweise flexible Anschlußleitungen 41 enthalten. Dieses Detail ist in Fig. 1b ersichtlich. Die Anschlußleitungen 41 werden beim Aufstecken des Radnabenantriebs in die Bohrungen 42 od. dgl. des Tragschildzapfens 7 gesteckt und ragen außen am Tragschild 6 heraus, wo sie in einfacher Weise mit der Einrichtung zur Förderung des Kühlmittels verbunden werden können.

Verschleißteile, wie Radreifen 1, Bremsscheibe 22, Erdungskontakt 27 od. dgl. sind vorteilhafterweise an der, der Fahrzeugmitte abgewandten Seite des Radnabenantriebs befestigt, sodaß sie von außen leicht zugänglich sind und ohne Demontage des Radnabenantriebs getauscht oder kontrolliert werden können. Zum Tausch des Radreifens 1 werden von außen die Schrauben 25 gelöst, der äußere Felgenring 3b abgezogen und schließlich der Radreifen 1 abgezogen. Zur Montage eines neuen Radreifens 1 werden die obengenannten Arbeitsschritte in umgekehrter Reihenfolge wiederholt.

Eine allfällige Bremsscheibe 22 ist vorteilhafterweise im Lagerdeckel 37 integriert und mit Schrauben 38 od. dgl. am äußeren Lagerschild 34 befestigt. Die Bremsscheibe 22 enthält eine Labyrinthdichtung 36, welche ein Eindringen von Schmutz und Staub von außen in das Innere des Radnabenantriebs und gleichzeitig ein Entweichen des Lagerfetts nach außen verhindert. Die Bremsscheibe 22 kann rasch und einfach durch Lösen der Schrauben 38 od. dgl. getauscht werden.

In Fig. 1 a ist ein weiterer Verschleißteil des Radnabenantriebs , der Erdungskontakt 21 im Detail dargestellt. Der rotierende Teil des Erdungskontakts 21 ist mit Hilfe von Schrauben 39 od. dgl. über eine Tragscheibe 43 am Lagerdeckel 37 befestigt. Eine am inneren Ende des Erdungskontakts 21 befindliche Kohle 27 schleift bei Rotation des Antriebs am feststehenden Schleifmetall 26, welches mit der Achse 14 verbunden ist. Der Erdungskontakt 21, die Kohle 27 und das Schleifmetall 26 können ebenfalls leicht von außen getauscht werden, ohne daß der Radnabenantrieb demontiert werden muß.

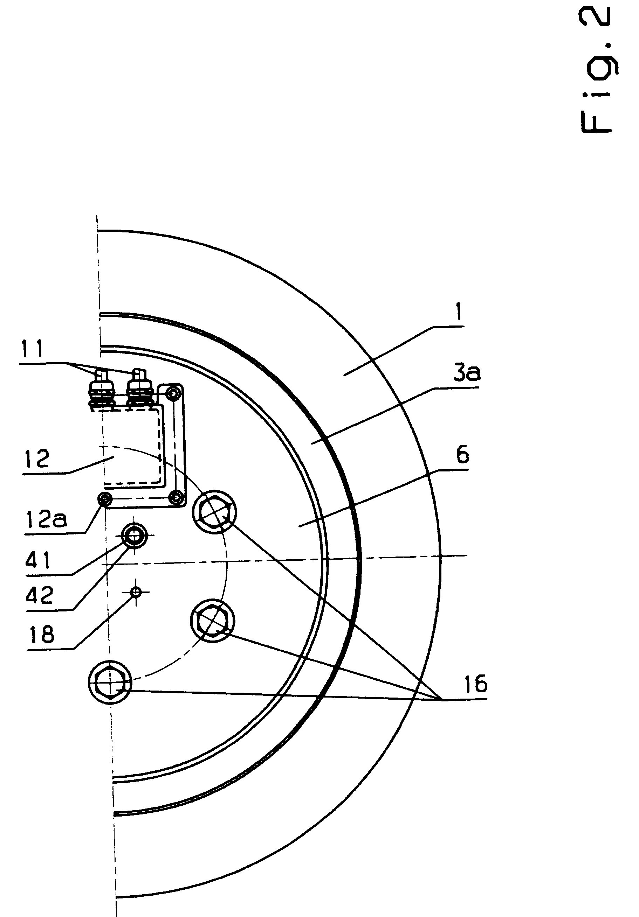

Fig. 2 zeigt eine Seitenansicht des Radnabenantriebs gemäß Fig. 1 von rechts, in diesem Fall von der, der Fahrzeugmitte zugewandten Seite des Radnabenantriebs . Zu sehen ist der Radreifen 1, der innere Felgenring 3a und das erfindungsgemäße Tragschild 6, das über kreisförmig winkelversetzt angeordnete Schrauben 16 od. dgl. an der Achse des Radnabenantriebs befestigt ist. Natürlich sind auch andere Verbindungen oder andere Anordnungen der Verbindungseinheiten möglich. Die Bohrung 42 od. dgl. zur Aufnahme der Anschlußleitung 41 zur Führung des Kühlmediums im Tragschildzapfen münden an der Außenseite des Tragschildes 6. In diesem Fall sind zwei Bohrungen 42 parallel nebeneinander angeordnet. Unterhalb der Bohrung 42 od. dgl. ist die Mündung einer Zuleitung 18 für die Zuführung von Öl, Glycerin od. dgl. in die Abpreßnuten ersichtlich. Oberhalb der Bohrungen 42 ist ein Klemmenkasten 12 mit den elektrischen Anschlüssen 11 des Radnabenantriebs angeordnet. Der Klemmenkasten 12 ist über Schrauben 12a od. dgl. am Tragschild 6 befestigt.

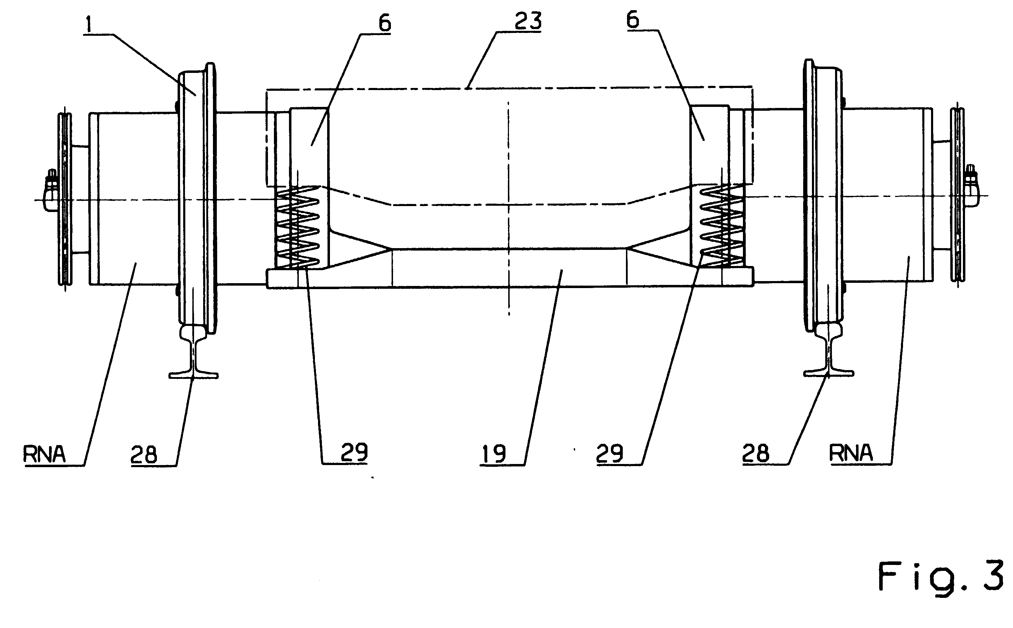

Fig. 3 zeigt schematisch die Verbindung des Radnabenantriebs mit dem Wagenkasten 23 eines Schienenfahrzeuges. Quer zur Fahrtrichtung sind zwei Radnabenantriebe einander gegenüberliegend angeordnet. Die mit den Rotorgehäusen 8 der Radnabenantriebe verbundenen Radreifen 1 laufen auf Schienen 28. Die erfindungsgemäßen Tragschilder 6 der gegenüberliegenden Radnabenantriebe werden über den Fahrzeugrahmen 19, wie z.B. eine Achsbrücke, miteinander verbunden, welcher den Wagenkasten 23, vorzugsweise über Federn 29, z.B. Primärfedern, trägt.

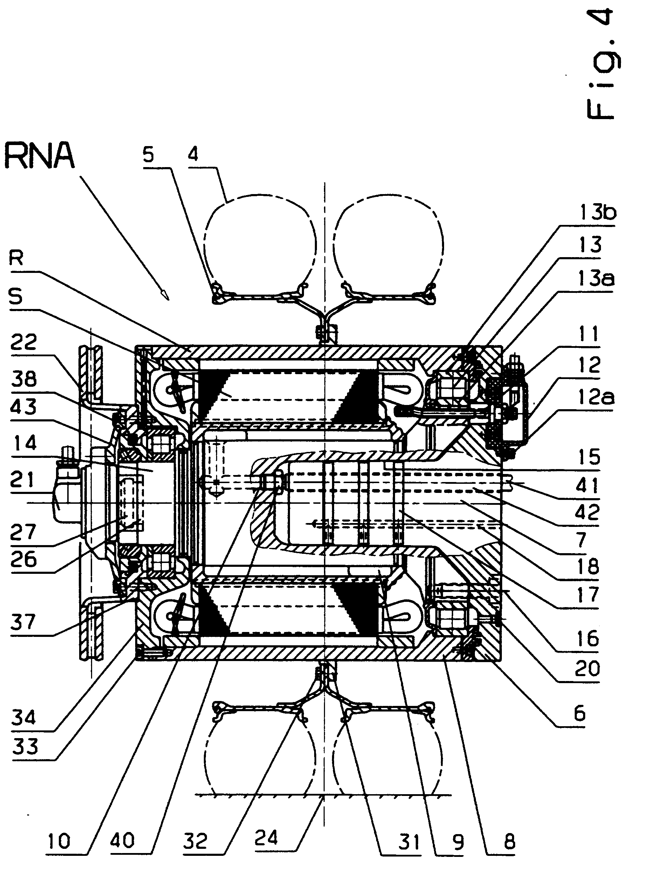

Fig. 4 zeigt eine Variante des erfindungsgemäßen Radnabenantriebs für den Reifen 4 eines nicht schienengebundenen Fahrzeuges. Solche Antriebe finden z.B. bei O-Bussen, Trolley-Bussen oder sogenannten Peoplemovern auf Flughäfen Anwendung. In diesem Fall ist das Rotorgehäuse 8 mittels eines Zwischenrings 31 und Schrauben 32 od. dgl. mit der Felge 5, welche den Reifen 4 trägt, fest verbunden. Für einen einfachen Reifenwechsel ist die Felge 5 nach außen nach Demontage der Schrauben 32 abnehmbar. Um ein Lenken des Fahrzeugs zu ermöglichen können die Radnabenantriebe in bekannter Weise gelenkig aufgehängt werden.

## Patentansprüche

1. Elektromotorischer Radnabenantrieb für ein Fahrzeugrad, insbesondere für ein Rad eines Schienenfahrzeuges, unter Verwendung eines Außenläufermotors, bei dem das Rotorgehäuse mit dem Fahrzeugrad verbunden ist und der Stator auf einer stillstehenden Achse sitzt, welche Achse einseitig am Fahrzeugrahmen od. dgl. aufgehängt ist, dadurch gekennzeichnet, daß die einseitige Aufhängung über ein mit der Achse (14) verbundenes Tragschild (6) geschieht, welches Tragschild (6) einen Tragschildzapfen (7) aufweist, der in eine Bohrung (15) in der Achse (14) in das Innere des Radnabenantriebs hineinragt.

2. Radnabenantrieb nach Anspruch 1, dadurch gekennzeichnet daß das Tragschild (6) an der, der Fahrzeugmitte zugewandten Seite des Radnabenantriebs mit der Achse (14) verbunden ist.

3. Radnabenantrieb nach Anspruch 1 oder 2, dadurch gekennzeichnet, daß der Tragschildzapfen (7) bis über den mittleren Aufstandspunkt (24) des Fahrzeugrades (1, 4) in das Innere des Radnabenantriebs hineinragt.

4. Radnabenantrieb nach einem der Ansprüche 1 bis 3, dadurch gekennzeichnet, daß die Bohrung (15) in der Achse (14) in Richtung des Inneren des Radnabenantriebs konisch verjüngend ausgebildet ist, und daß der Tragschildzapfen (7) zur Bohrung (15) vorzugsweise komplementäre Gestalt aufweist.

5. Radnabenantrieb nach mindestens einem der Ansprüche 1 bis dadurch gekennzeichnet, daß der Tragschildzapfen (7) mindestens eine, vorzugsweise ringförmige Abpreßnut (17) aufweist, welche mit mindestens einer Zuleitung (18) verbunden ist.

6. Radnabenantrieb nach mindestens einem der Ansprüche 1 bis 5, dadurch gekennzeichnet, daß die Achse (14) mäanderförmig verlaufende Kühlkanäle (9) aufweist, deren Anschlüsse (10) an der Stirnseite der Bohrung (15) in der Achse (12) münden.

7. Radnabenantrieb nach mindestens einem der Ansprüche 1 bis 5, dadurch gekennzeichnet, daß die Achse (14) Kühlkanäle (9) in Form einer Doppelschraube bzw. -spirale aufweist, deren Anschlüsse (10) an der Stirnseite der Bohrung (15) in der Achse (12) münden.

8. Radnabenantrieb nach Anspruch 6 oder 7, dadurch gekennzeichnet, daß im Tragschildzapfen (7) Bohrungen (42) od. dgl. zur Aufnahme von Anschlußleitungen zur Führung des Kühlmediums enthalten sind.

9. Radnabenantrieb nach mindestens einem der Ansprüche 1 bis 8, dadurch gekennzeichnet, daß elektrische Anschlüsse (11) des Radnabenantriebs in einem am Tragschild (6) befestigten Klemmenkasten (12) angeordnet sind.

10. Radnabenantrieb nach mindestens einem der Ansprüche 1 bis 9, dadurch gekennzeichnet, daß der Radnabenantrieb durch eine Synchron-, Asynchron- oder Transversalflußmaschine gebildet ist.

## Claims

1. An electric motor wheel hub drive for a vehicle wheel, more particularly for a wheel of a rail vehicle, using an outside rotor motor, wherein the rotor casing is connected to the vehicle wheel and the stator is disposed on a stationary axle suspended on one side from the vehicle frame or the like, characterised in that the one-sided suspension is effected via a supporting plate (6) connected to the axle (14) and having a bearing plate pin (7) which extends via a bore (15) in the axle (14) into the interior of the wheel hub drive.

2. A wheel hub drive according to Claim 1, characterised in that the supporting plate (6) is connected to the axle (14) on the side of the wheel hub drive adjacent the centre of the vehicle.

3. A wheel hub drive according to Claims 1 or 2, characterised in that the supporting plate pin (7) extends into the interior of the wheel hub drive to beyond the central wheel tread point (24) of the vehicle wheel (1,4).

4. A wheel hub drive according to one of Claims 1 to 3, characterised in that the bore (15) in the axle (14) is constructed to taper conically in the direction of the interior of the wheel hub drive, and the supporting plate pin (7) has a shape preferably complementary to the bore (15).

5. A wheel hub drive according to at least one of Claims 1 to 4, characterised in that the supporting plate pin (7) has at least one preferably annular press-out groove (17) which is connected to at least one supply line (18).

6. A wheel hub drive according to at least one of Claims 1 to 5, characterised in that the axle (14) has cooling channels (9) which extend in meander form and whose connections (10) discharge at the end of the bore (15) in the axle (14).

7. A wheel hub drive according to at least one of Claims 1 to 5, characterised in that the axle (14) has cooling channels (9) in the form of a double screw or double spiral whose connections (10) discharge at the end of the bore (15) in the axle (14).

8. A wheel hub drive according to Claims 6 or 7, characterised in that the supporting plate pin (7) is formed with bores (42) or the like for receiving connecting lines for carrying the cooling medium.

9. A wheel hub drive according to at least one of Claims 1 to 8, characterised in that the electric connections (11) of the wheel hub drive are disposed in a terminal box (12) attached to the supporting plate (6).

10. A wheel hub drive according to at least one of Claims 1 to 9, characterised in that the wheel hub drive is formed by a synchronous, an asynchronous or a transverse flux machine.

## Revendications

1. Entraînement de moyen de roue par moteur électrique pour une roue de véhicule, en particulier pour une roue d'un véhicule ferroviaire, avec utilisation d'un moteur à rotor extérieur, dans lequel le carter de rotor est relié à la roue de véhicule et le stator est monté sur un axe fixe, ledit axe étant suspendu d'un côté aux le châssis de véhicule ou analogue, caractérisé en ce que la suspension d'un côté s'effectue par l'intermédiaire d'un bouclier porteur (6) relié à l'essieu (14), ce bouclier porteur (6) présentant un tourillon ou fusée de bouclier porteur (7) qui pénètre en saillie dans un alésage (15) ménagé dans l'essieu (14), à l'intérieur de l'entraînement de moyeu de roue.

2. Entraînement de moyen de roue selon la revendication 1, caractérisé en ce que le bouclier porteur (6) est relié à l'essieu (14) du côté de l'entraînement de moyeu de roue tourné vers le milieu du véhicule.

3. Entraînement de moyeu de roue selon la revendication 1 ou 2, caractérisé en ce que le tourillon de bouclier porteur (7) pénètre en saillie à l'intérieur de l'entraînement de moyen de roue jusqu'à dépasser le point médian de voie (24) de la roue de véhicule (1, 4).

4. Entraînement de moyen de roue selon l'une des revendications 1 à 3, caractérisé en ce que l'alésage (15) ménagé dans l'essieu (14) est réalisé en s'effilant de façon conique en direction de l'intérieur de l'entraînement de moyeu de roue et en ce que le tourillon de bouclier porteur (7) présente une configuration de préférence complémentaire de celle de l'alésage (15).

5. Entraînement de moyeu de roue selon au moins l'une des revendications 1 à 4, caractérisé en ce que le tourillon de bouclier porteur (7) présente au moins une gorge de suppression de l'effet de frettage (de défrettage) (17), de préférence de forme annulaire, reliée à au moins une conduite d'alimentation (18).

6. Entraînement de moyeu de roue selon au moins l'une des revendications 1 à 5, caractérisé en ce que l'essieu (14) présente des canaux de refroidissement (8) s'étendant en forme de méandres, canaux dont les raccordements (10) débouchent sur la face frontale de l'alésage (15) dans l'essieu (12).

7. Entraînement de moyeu de roue selon au moins l'une des revendications 1 à 5, caractérisé en ce que l'essieu (14) présente des canaux de refroidissement (9) réalisés sous la forme d'une double hélice ou d'une double spirale, dont les raccordements (10) débouchent sur la face frontale de l'alésage (15) dans l'essieu (12).

8. Entraînement de moyeu de roue selon revendication 6 ou 7, caractérisé en ce que dans le tourillon de bouclier poteur (7) sont ménagés des alésages (42) ou analogues destinés à recevoir des conduites de raccordement pour guider le fluide de refroidissement.

9. Entraînement de moyeu de roue selon au moins l'une des revendications 1 à 8, caractérisé en ce que des raccordements électriques (11) de l'entraînement de moyen de roue sont disposés dans une boîte à bornes (12) fixée au bouclier porteur (6).

10. Entraînement de moyeu roue selon au moins l'une des revendications 1 à 9, caractérisé en ce que l'entraînement de moyeu de roue est constitué par un moteur synchrone, asynchrone, ou à flux transversal.
